# EUROPEAN PATENT SPECIFICATION

(11) **EP 3 210 268 B1**
(45) Date of publication and mention of the grant of the patent: **26.12.2018**
(21) Application number: 15804948.6
(22) Date of filing: 21.10.2015
(51) Int. Cl.: H02G 1/12

(54) **SCRAPING TOOL, IN PARTICULAR TOOL FOR REMOVAL OF POLISH FROM COPPER OR ALUMINIUM WIRES OR TUBES**
ABKRATZWERKZEUG, IM BESONDEREN ZUR ENTFERNUNG VON POLITUR VON DRÄHTEN ODER ROHREN AUS KUPFER ODER ALUMINIUM
OUTIL RACLEUR, POUR ÉLIMINER UN PRODUIT À POLIR DE FILS OU TUBES EN CUIVRE OU ALUMINIUM EN PARTICULIER

(30) Priority: 23.10.2014 IT NO20140004
(43) Date of publication of application: 30.08.2017
(73) Proprietor: Rikom S.r.l., 20125 Milano (IT)
(72) Inventor: RICHICHI, Giuseppe, I-20020 Busto Garolfo (Milano) (IT)
(74) Representative: Zermani, Umberto
(86) International application number: PCT/IB2015/058118
(87) International publication number: WO 2016/063230

(56) References cited:
- EP-A2- 1 324 449
- WO-A1-2009/016553
- DE-U- 1 751 696
- US-A- 2 452 423
- US-A- 4 577 405

## Description

### Technical Field

The present invention refers to a scraping tool, in particular a tool for removal of polish from copper or aluminium wires or tubes.

Therefore, the present invention finds particular application in the field of industrial tooling, especially in the realization and maintenance of electrical components, such as windings or the like.

More precisely, the present invention finds application in the realization of the so-called operation of "stripping" of conductors, needed in order to make connections allowing electrical conductivity. Some conductors, to which reference can be made, are those used for windings of various kinds in the electromechanical field.

Disadvantageously, these methods are inefficient and dangerous for the operator.

In fact, the improper use of rotating knives or brushes does not allow for safe operation, jeopardizing the safety of those who act on the conductor. Furthermore, not being tools designed for such use, their inefficiency is marked both in removing the single insulating layer, of difficult adjustment, and because of the inability to operate on both sides of the strap simultaneously and in the same way.

### State of the art

In the known art, dedicated tools for stripping sheaths containing electric wires/cables are known, all equipped blades or other cutting elements allowing opening the sheath by longitudinal or circumferential incisions; however, to date, no dedicated tool has been designed yet for the stripping of non-sheathed conductors, insulated with polishes or the like.

This operation, in fact, is now achieved using scissors or blades in an improper way to scrape or scratch the surface polish away, or using nondedicated power tools equipped with rotary brushes acting on the wire or cable. Some further prior art solutions, mainly dedicated to stripping of sheaths containing electric wires/cables, are known from patent documents US2452423 and WO2009/016553.

### Object of the invention

The object of the present invention is to provide a scraping tool allowing to overcome the above-mentioned drawbacks of the known art.

In particular, the object of the present invention is to provide a quick and efficient scraping tool.

In addition, the purpose of the present invention is to provide a simple scraping tool, applicable to any rotary electric or pneumatic tool.

Said purposes are thus achieved by a scraping tool comprising an elongated cylinder-shaped body, extending longitudinally between a first end, connectable to a rotary tool, and a second end; said body being provided with a central longitudinal hole and a transverse through hole, proximal to said second end relative to said first end, two blades slidably housed in said transverse hole and overlapping each other, wherein each blade has a central hole defining the cutting edge of the blade and centrifugal actuation means, configured to move the blades in conjunction with a rotation of the elongated body from a receiving position, wherein blades are perfectly overlapping, with central holes lining up, and an operating position, wherein the two blades are shifted away from each other along a same sliding direction, so that the walls of the central holes come into contact with a conductor inserted therein.

### Brief description of the drawings

Further characteristics and advantages of the present invention will become particularly apparent from the following description of an exemplary, but not exclusive, and therefore not restrictive, preferred embodiment of scraping tool, as illustrated in the appended figures, wherein:
Fig. 1 - Side view of the scraping tool according to the present invention, wherein the longitudinal and central hole where the wire or tube is housed is dashed;
Fig. 2 - Front view of the tool of Fig. 1;
Fig. 3 - Side view at 90 degrees relative to Fig.1;
Fig. 4 - Side view of the still tool, with a wire or tube inserted therein.
Fig. 5 - Side view of the tool in motion;
Fig. 6 - Top view of the blades;
Fig. 7 - View of overlapping blades (housed in their seat, in the body);
Fig. 8 - View of the overlapping blades (housed in their seat, in the body) when the tool is in motion;
Fig. 9 - View of the overlapping blades (housed in their seat, in the body) when the tool is still;
Fig. 10 - View of the overlapping blades (housed in their seat, in the body), when the tool is in motion, with the wire or tube inserted therein;
Fig. 11 - Exploded view of the tool.

### Detailed description of preferred embodiments of the invention

With reference to the appended figures, number 1 indicates a scraping tool according to the present invention.

It is to be noted that this description is to be considered only for illustrative, thus not restrictive purposes; therefore, the present invention can be implemented according to other and different embodiments.

The tool 1 comprises an elongated body 4 extending longitudinally (along its own axis of development) between a first end, connectable to a rotary tool, and a second end.

Such elongated body 4 has a prismatic, preferably cylindrical shape.

The body 4 is provided with a central longitudinal hole 5 and a transverse through hole 13, proximal to said second end with respect to said first end. The transverse hole 13 is preferably orthogonal to the longitudinal hole 5. The tool 1 also comprises two blades 3 slidably housed in the transverse hole 13 and overlapping each other.

Preferably, the blades are rectangular; more preferably, they are defined by plates.

The transverse hole 13 thus preferably has a rectangular section.

In addition, the blades 3 may have side bevels.

Each blade 3 has a central hole 10 defining the cutting edge of the blade and are slidably movable from a receiving position, in which blades 3 are positioned so that the central holes 10 present a maximum overlap area, and an operating position, in which the two blades 3 are shifted away from each other along a same sliding direction, so that the central holes 10 present a reduced overlap area and the walls of central holes 10 come into contact with a conductor inserted therein.

Thus, in the receiving position, the blades 3 preferably overlap perfectly the lined up central holes 10.

It is however to be noted that, in the receiving position, the two holes are not necessarily perfectly overlapped, but can also be staggered so as to define a passage span for the cable or wire to be scraped.

On the other hand, in the operating position, central holes 10 are partly overlapping.

It is also to be noted that, in the receiving position, central holes 10 are longitudinally aligned to the longitudinal central hole 5 of the elongated body so as to allow the insertion and extraction of the wire or cable to be stripped.

Preferably, the central holes 10 of the blades 3 have a rectangular or square conformation.

In certain embodiments, the central holes 10 of the blades 3 are oblique relative to the plane of the blade 3 itself.

In addition, in some embodiments, the edges of said central holes 10 of the blades 3 are knurled or serrated to better fit the needs of the user.

For proper operation, the tool 1 also comprises centrifugal actuation means 2 configured for moving the blades 3 in conjunction with a rotation of the elongated body 4 between the receiving position and the operating position.

In the preferred embodiment, each blade 3 comprises a further peripheral hole 6.

The blades 3 are introduced into the housing overlapping, with the further peripheral holes 6 opposed to each other, each for housing a pin of said centrifugal actuation means 2.

In this regard, the centrifugal actuation means 2 comprise two tabs or rods 2 extending longitudinally between a first end, proximal to the first end of the elongated body 4 and pivoted in the elongated body 4, and a second end, pivoted in a respective blade 3 preferably in its further peripheral hole 6.

During the rotation of the elongated body, the tabs or rods 2 "open" due to the centrifugal force, to shift the blades in the operating position.

Preferably, a pair of dowels inserted in the elongated body 4 is provided, more preferably about 10-15 mm from the first end of a respective tab or rod 2, and each defining a pivot point to a respective tab or rod 2.

For a better automation of the behaviour, the tool 1 comprises elastic return means 11 associated to the tabs or rods 2 to retain them or bring them back into a rest position corresponding to said receiving position of the blades 3.

In the preferred embodiment, the elastic return means 11 comprise two springs, each operatively active between the elongated body 4 and the respective tab or rod 2.

Furthermore, to allow maximum compactness of the tool 1, i.e. to allow the tabs to lodge partially in the elongated body 4 in a rest condition, each blade 3 also comprises a groove 11, in which the further hole 6 and the groove 11 are arranged on opposite sides of the central hole 10.

Thus, in the receiving position of the blades 3, the tab or rod 2 pivoted in the further hole 6 of a blade 3 is accommodated in the groove 11 of the other.

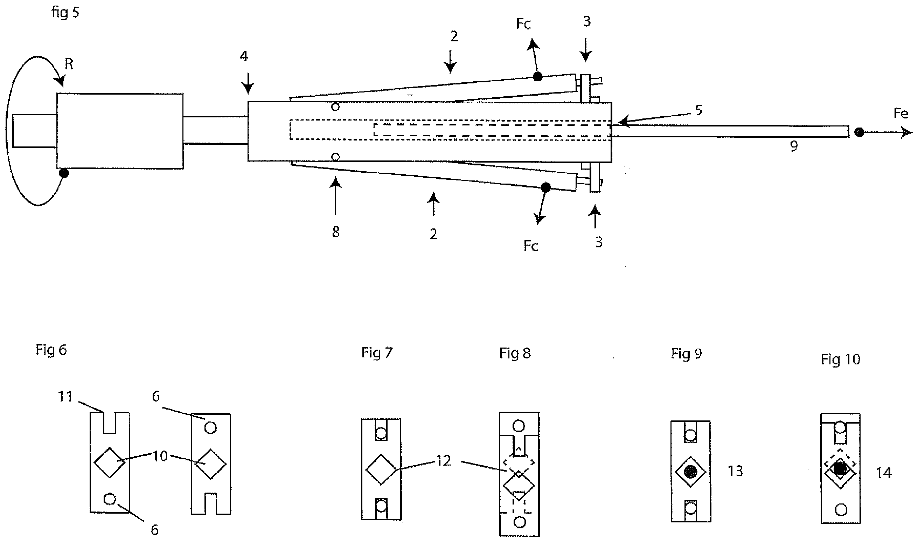

Functionally, the blades are then introduced into the housing overlapping the further hole 6 opposite to one another (Fig. 7). These holes accommodate the pins at the end of the two tabs 2 placed on the sides of the central body 4 and hinged to it by a dowel inserted at about 10-15 mm from the tab 2 itself.

In order to keep the tabs adherent to the central body and to make sure that the blades are perfectly superimposed, with central holes lining up, two springs 11 are then inserted.

Once so assembled, it can be connected to a rotary tool.

By applying the rotating force to the tool (Fig. 5) it is possible to notice that tabs 2 will tend (by centrifugal force) to move away from the central body 4 dragging the blades 3 with them.

The central holes 10 of the blades 3 defining the cutting edge (Fig. 7) will no longer be lining up but, by moving away from each other, they will progressively reduce the space until the free area 12 no longer exists.

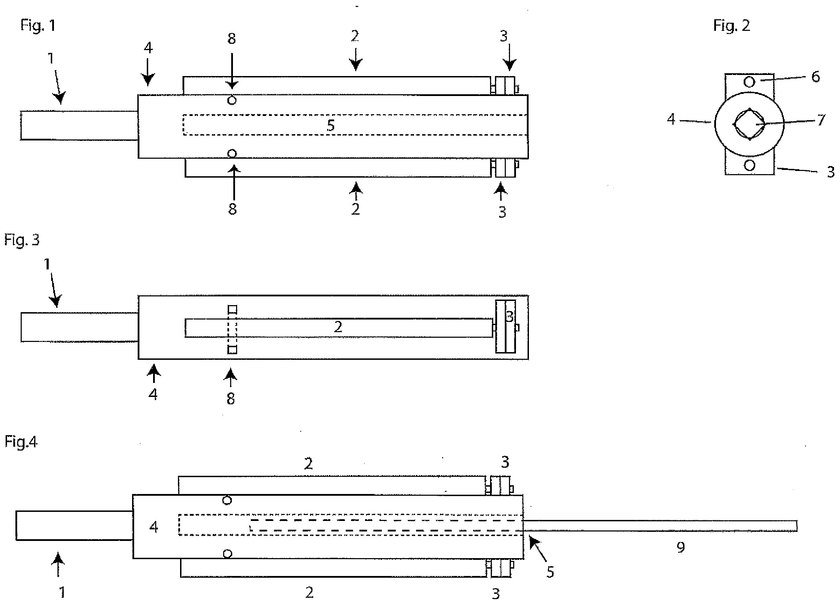

To obtain the stripping, while the tool is still, it is necessary to insert the wire into the longitudinal hole 5 of the body 4, mating with the central hole 10 of the blades (Fig. 4 and, in detail, the blades in Fig. 10).

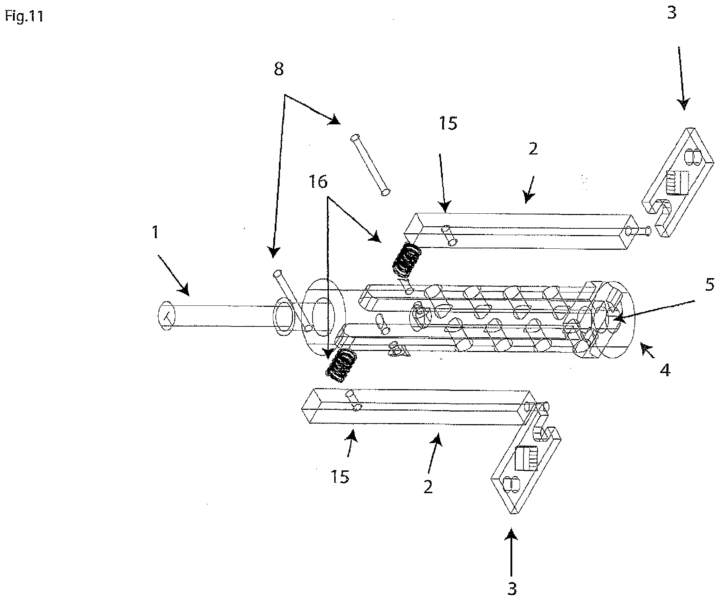

After actuating the rotary tool, the tabs 2 drag the blades along with them, making them adhere to the wire (Fig. 11); removing the wire from the longitudinal hole 5, its side surface is superficially scraped off by removing the polish.

The invention achieves the intended aim and achieves important advantages.

In fact, the presence of a scraping tool provided with two blades operating by centrifugal force allows to obtain a simple and quick removal of the insulation.

Moreover, the presence of such compact and basic elements allows to keep the tool very simple and reliable and, therefore, cost-effective.

Explanation of parts with numbering valid for all figures:
- 1.: Insert or pin
- 2.: Side tabs or rods
- 3.: Blades
- 4.: Body
- 5.: Longitudinal hole
- 6.: Hole on blade for connection to tab
- 7.: Opening for wire insertion (passing through longitudinal hole 5 and blade holes 10)
- 8.: Pin for hinging the tabs
- 9.: Wire or tube to be stripped
- 10.: Holes in the blades where the cutting edge is
- 11.: Blade groove
- 12.: Area defined by the coincident overlap of overlapping blades
- 13.: Wire inserted in overlapping blades
- 14.: Wire blocked by the blades in rotation
- 15.: Holes in the tabs to hinge to the body
- 16.: Contrast springs

## Claims

1. Scraping tool comprising:
- an elongated body (4) extending longitudinally between a first end, connectable to a rotary tool, and a second end; said body being provided with a longitudinal central hole (5) and a transverse through hole (13) proximal to said second end with respect to said first end;
- two blades (3) slidably housed in said transverse hole (13);
- centrifugal actuation means (2) configured to move the blades (3) in conjunction with a rotation of the elongated body (4) between a receiving position and an operating position,
wherein said centrifugal actuation means (2) comprises two tabs or rods (2) extending longitudinally between a first end, proximal to the first end of the elongated body (4) and pivoted in the elongated body (4), and a second end pivoted in a respective blade (3) and
wherein said centrifugal actuation means (2) are designed in such a way that the tabs or rods (2) open due to the centrifugal force;
**characterized in that**:
- said two blades (3) overlap to each other and have each a central hole (10) defining the cutting edge of the blade,
- in the receiving position the blades (3) are positioned so that the central holes (10) present a maximum overlap area,
- in the operating position the two blades (3) are shifted away from each other along the same sliding direction so that the central holes (10) have a reduced overlap area and the walls of the central holes (10) come into contact with a conductor inserted therein,
wherein the opening of the tabs or rods (2) due to the centrifugal force shifts the blades in the operating position.

2. Scraping tool according to claim 1, **characterized in that** each blade (3) comprises an additional peripheral hole (6); said blades (3) being introduced into the housing overlapping, with the further peripheral holes (6) opposite to one another, each housing a pin of said centrifugal actuation means (2).

3. Scraping tool according to claim 2, **characterized in that** each blade (3) further comprises a groove (11), wherein the further hole (6) and the groove (11) are arranged on opposite sides of the central hole (10) .

4. Scraping tool according to claim 2 or 3, **characterized in that** said second end of the rods is pivoted in the respective further peripheral hole (6) of the respective blade (3).

5. Scraping tool according to claim 4, **characterized in that** it comprises a pair of dowels inserted in the elongated body (4), preferably at about 10-15 mm from the first end of a respective tab or rod (2), and defining each a pivot point for a respective tab or rod (2).

6. Scraping tool according to claim 4 or 5, **characterized in that** it comprises elastic return means (11) associated to the tabs or rods (2) to hold them or bring them back into a rest position corresponding to said receiving position of the blades (3) .

7. Scraping tool according to claim 6, **characterized in that** said elastic return means (11) comprise two springs, each operatively active between the elongated body (4) and the respective tab or rod (2).

8. Scraping tool according to any one of the preceding claims, **characterized in that** said elongated body (4) has a prismatic, preferably cylindrical shape.

9. Scraping tool according to any one of the preceding claims, **characterized in that** said central holes (10) of the blades (3) have a rectangular or square conformation.

10. Scraping tool according to any one of the preceding claims, **characterized in that** said central holes (10) of the blades (3) are oblique relative to the plane of the blade (3) itself.

11. Scraping tool according to any one of the preceding claims, **characterized in that** the edges of said central holes (10) of the blades (3) are knurled or serrated, to better fit the needs of the user.

12. Scraping tool according to any one of the preceding claims, **characterized in that** the blades (3) have a rectangular shape.

13. Scraping tool according to any one of the preceding claims, **characterized in that** the central holes (10) of the blades (3) are aligned to the longitudinal central hole (5) of the elongated body (4) to allow insertion and extraction of the wire or cable to be stripped.

## Patentansprüche

1. Abkratzwerkzeug, umfassend:
- einen länglichen Körper (4), der sich in Längsrichtung zwischen einem ersten Ende, das mit einem rotierenden Werkzeug verbindbar ist, und einem zweiten Ende erstreckt; wobei der Körper mit einem Längsmittelloch (5) und einem Querdurchgangsloch (13) proximal zum zweiten Ende in Bezug auf das erste Ende versehen ist;
- zwei Schaufeln (3), die gleitend in dem Querloch (13) untergebracht sind;
- Zentrifugalbetätigungsmittel (2), die konfiguriert sind, um die Schaufeln (3) in Verbindung mit einer Drehung des länglichen Körpers (4) zwischen einer Aufnahmestellung und einer Betriebsstellung zu bewegen, wobei die Zentrifugalbetätigungsmittel (2) zwei Laschen oder Stäbe (2) umfassen, die sich in Längsrichtung zwischen einem ersten Ende, das proximal zum ersten Ende des länglichen Körpers (4) und in dem länglichen Körper (4) schwenkbar ist, und einem zweiten Ende erstrecken, das in einer jeweiligen Schaufel (3) schwenkbar ist und
wobei die Zentrifugalbetätigungsmittel (2) so ausgelegt sind, dass sich die Laschen oder Stäbe (2) aufgrund der Zentrifugalkraft öffnen;
**dadurch gekennzeichnet, dass**:
- die beiden Schaufeln (3) sich gegenseitig überlappen und weisen jeweils ein Mittelloch (10) auf, das die Schneidkante der Schaufel definiert,
- in der Aufnahmestellung die Schaufeln (3) so positioniert sind, dass die Mittellöcher (10) einen maximalen Überlappungsbereich aufweisen,
- in der Betriebsstellung die beiden Schaufeln (3) entlang der gleichen Gleitrichtung voneinander weggeschoben werden, so dass die Mittellöcher (10) einen reduzierten Überlappungsbereich aufweisen und die Wände der Mittellöcher (10) mit einem darin eingesetzten Leiter in Kontakt kommen,
wobei die Öffnung der Laschen oder Stäbe (2) aufgrund der Zentrifugalkraft die Schaufeln in die Betriebsstellung verschiebt.

2. Abkratzwerkzeug nach Anspruch 1, **dadurch gekennzeichnet, dass** jede Schaufel (3) ein zusätzliches Umfangsloch (6) umfasst; wobei die Schaufeln (3) in das Gehäuse eingeführt werden, überlappend mit den weiteren Umfangslöchern (6), einander gegenüberliegend, wobei jede einen Stift der Zentrifugalbetätigungsmittel (2) unterbringt.

3. Abkratzwerkzeug nach Anspruch 2, **dadurch gekennzeichnet, dass** jede Schaufel (3) ferner eine Nut (11) umfasst, wobei das weitere Loch (6) und die Nut (11) auf gegenüberliegenden Seiten des Mittellochs (10) angeordnet sind.

4. Abkratzwerkzeug nach Anspruch 2 oder 3, **dadurch gekennzeichnet, dass** das zweite Ende der Stäbe in dem jeweils weiteren Umfangsloch
(6) der jeweiligen Schaufel (3) schwenkbar ist.

5. Abkratzwerkzeug nach Anspruch 4, **dadurch gekennzeichnet, dass** es ein Paar Dübel umfasst, die in den länglichen Körper (4) eingesetzt sind, vorzugsweise etwa 10-15 mm vom ersten Ende einer/eines jeweiligen Lasche oder Stabs (2), und die jeweils einen Drehpunkt für eine jeweilige Lasche oder Stab (2) definieren.

6. Abkratzwerkzeug nach Anspruch 4 oder 5, **dadurch gekennzeichnet, dass** es elastische Rückstellmittel (11) umfasst, die mit den Laschen oder Stäben (2) assoziiert sind, um sie zu halten oder sie in eine Ruhestellung zurückzubringen, die der Aufnahmestellung der Schaufeln (3) entspricht.

7. Abkratzwerkzeug nach Anspruch 6, **dadurch gekennzeichnet, dass** die elastischen Rückstellmittel (11) zwei Federn umfassen, die jeweils zwischen dem länglichen Körper (4) und der jeweiligen Lasche oder dem Stab (2) betriebswirksam sind.

8. Abkratzwerkzeug nach einem der vorhergehenden Ansprüche, **dadurch gekennzeichnet, dass** der längliche Körper (4) eine prismatische, vorzugsweise zylindrische Form aufweist.

9. Abkratzwerkzeug nach einem der vorhergehenden Ansprüche, **dadurch gekennzeichnet, dass** die Mittellöcher (10) der Schaufeln (3) eine rechteckige oder quadratische Ausgestaltung aufweisen.

10. Abkratzwerkzeug nach einem der vorhergehenden Ansprüche, **dadurch gekennzeichnet, dass** die Mittellöcher (10) der Schaufeln (3) schräg zur Ebene der Schaufel (3) selbst stehen.

11. Abkratzwerkzeug nach einem der vorhergehenden Ansprüche, **dadurch gekennzeichnet, dass** die Kanten der Mittellöcher (10) der Schaufeln (3) gerändelt oder gezahnt sind, um die Bedürfnisse des Benutzers besser zu erfüllen.

12. Abkratzwerkzeug nach einem der vorhergehenden Ansprüche, **dadurch gekennzeichnet, dass** die Schaufeln (3) eine rechteckige Form aufweisen.

13. Abkratzwerkzeug nach einem der vohergehenden Ansprüche, **dadurch gekennzeichnet, dass** die Mittellöcher (10) der Schaufeln (3) auf das Längsmittelloch (5) des länglichen Körpers (4) ausgerichtet sind, um ein Einsetzen
und Herausziehen der zu abisolierenden Leitung oder des Kabels zu ermöglichen.

## Revendications

1. Outil racleur comprenant :
- un corps allongé (4) se prolongeant longitudinalement entre une première extrémité, pouvant être reliée à un outil rotatif, et une seconde extrémité ; ledit corps étant pourvu d'un orifice central longitudinal (5) et d'un trou passant (13) transversal proximal à ladite seconde extrémité par rapport à ladite première extrémité ;
- deux lames (3) logées de façon coulissante dans ledit orifice (13) transversal ;
- des moyens d'actionnement centrifuges (2) configurés pour déplacer les lames (3) conjointement à une rotation du corps allongé (4) entre une position de réception et une position fonctionnelle,
dans lequel lesdits moyens d'actionnement centrifuges (2) comprennent deux languettes ou tiges (2) se prolongeant longitudinalement entre une première extrémité, proximale à la première extrémité du corps allongé (4) et pouvant pivoter dans le corps allongé (4), et une seconde extrémité pouvant pivoter dans une lame (3) respective et
dans lequel lesdits moyens d'actionnement centrifuges (2) sont conçus de manière à ce que les languettes ou tiges (2) s'ouvrent en raison de la force centrifuge ; **caractérisé en ce que** :
- lesdites deux lames (3) se superposent l'une sur l'autre et comportent chacune un orifice central (10) définissant le bord de coupe de la lame,
- dans la position de réception, les lames (3) sont positionnées de sorte que les orifices centraux (10) présentent une zone de superposition maximum,
- dans la position fonctionnelle, les deux lames (3) sont éloignées l'une de l'autre le long de la même direction de coulissement de sorte que les orifices centraux (10) aient une zone de superposition réduite et que les cloisons des orifices centraux (10) viennent se mettre en contact avec un conducteur inséré en leur sein,
dans lequel l'ouverture des languettes ou tiges (2), provoquée par les déplacements de la force centrifuge, déplace les lames dans la position fonctionnelle.

2. Outil racleur selon la revendication 1, **caractérisé en ce que** chaque lame (3) comprend un orifice périphérique (6) supplémentaire ; lesdites lames (3) étant introduites dans la superposition de logement avec les orifices périphériques (6) supplémentaires opposés réciproquement, chacun logeant un axe desdits moyens d'actionnement centrifuges (2).

3. Outil racleur selon la revendication 2, **caractérisé en ce que** chaque lame (3) comprend de plus une rainure (11), dans lequel l'orifice (6) supplémentaire et la rainure (11) sont disposés sur des côtés opposés de l'orifice central (10).

4. Outil racleur selon la revendication 2 ou 3, **caractérisé en ce que** ladite seconde extrémité des tiges peut pivoter dans l'orifice périphérique (6) supplémentaire respectif de la lame (3) respective.

5. Outil racleur selon la revendication 4, **caractérisé en ce qu'**il comprend une paire de chevilles introduites dans le corps allongé (4), de préférence à environ 10 - 15 mm de la première extrémité d'une languette ou tige (2) respective, et définissant chacune un point pivot pour une languette ou tige (2) respective.

6. Outil racleur selon la revendication 4 ou 5, **caractérisé en ce qu'**il comprend des moyens de rappel élastiques (11) associés aux languettes ou tiges (2) pour les maintenir ou les ramener dans une position de repos correspondant à ladite position de réception des lames (3).

7. Outil racleur selon la revendication 6, **caractérisé en ce que** les moyens de rappel élastiques (11) comprennent deux ressorts, chacun fonctionnellement actif entre le corps allongé (4) et la languette ou tige (2) respective.

8. Outil racleur selon l'une quelconque des revendications précédentes, **caractérisé en ce que** ledit corps allongé (4) possède une forme prismatique, de préférence, cylindrique.

9. Outil racleur selon l'une quelconque des revendications précédentes, **caractérisé en ce que** lesdits orifices centraux (10) des lames (3) possèdent une forme rectangulaire ou carrée.

10. Outil racleur selon l'une quelconque des revendications précédentes, **caractérisé en ce que** lesdits orifices centraux (10) des lames (3) sont obliques par rapport au plan de la lame (3) elle-même.

11. Outil racleur selon l'une quelconque des revendications précédentes, **caractérisé en ce que** les bords desdits orifices centraux (10) des lames (3) sont crénelés ou crantés pour mieux répondre aux besoins de l'utilisateur.

12. Outil racleur selon l'une quelconque des revendications précédentes, **caractérisé en ce que** lesdites lames (3) ont une forme rectangulaire.

13. Outil racleur selon l'une quelconque des revendications précédentes, **caractérisé en ce que** lesdits orifices centraux (10) des lames (3) sont alignés par rapport à l'orifice central longitudinal (5) du corps allongé (4) pour permettre l'insertion et l'extraction du fil ou du câble à ébavurer.
